# EUROPEAN PATENT SPECIFICATION

(11) **EP 1 638 898 B1**
(45) Date of publication and mention of the grant of the patent: **10.09.2008**
(21) Application number: 04738455.7
(22) Date of filing: 17.06.2004
(51) Int. Cl.: C03B 9/36, C03B 9/16, F16K 1/12

(54) **APPARATUS FOR AIRFLOW CONTROL DURING THE GLASS FORMING IN A MOULD**
VORRICHTUNG ZUR KONTROLLE DES LUFTSTROMS WÄHREND DER GLASHERSTELLUNG IN EINER VORFORM
APPAREIL POUR REGULER L'ECOULEMENT DE L'AIR DANS UN MOULE LORS DE LA FORMATION DU VERRE

(30) Priority: 27.06.2003 CZ 20031439
(43) Date of publication of application: 29.03.2006
(73) Proprietor: Sklostroj Turnov CZ, S.R.O., 511 24 Turnov (CZ)
(72) Inventor: MAZANEK, Petr, 511 01 Turnov (CZ)
(74) Representative: Andera, Jiri
(86) International application number: PCT/CZ2004/000035
(87) International publication number: WO 2005/000750

(56) References cited:
- EP-A- 1 235 012
- WO-A-97/39988
- DE-B- 1 192 898
- US-A- 2 347 181
- US-A- 4 657 048
- PATENT ABSTRACTS OF JAPAN vol. 011, no. 193 (C-430), 20 June 1987 (1987-06-20) -& JP 62 017030 A (YAMAGATA SHINETSU SEKIEI:KK; others: 01), 26 January 1987 (1987-01-26)

## Description

### Technical Field

The invention relates to an apparatus for airflow control at the glass forming in a mould, comprising a multi-way valve, in which body a piston valve is placed, while behind the valve an ejector is arranged.

### Background Art

At the forming of the glass containers on the glass machines at some processes is impacted to the glass drop in the form both by the pressure air and also by the vacuum. For example at so-called "blow-blow process", first a drop of the molten glass is dropped from above to so-called blank mould. On the upper side of the mould the pressure air is input, which presses down the drop on the lower part of the blank mould cavity. After that the pressure air is input to the lower side of the blank mould and the molten glass at the so called counterblow fills the whole cavity of the blank mould, by which it creates the semi-finished product of the glass package. Consecutively the semi-finished product is moved from the front mould to the final mould, in which the semi-finished product is formed to the final form of the glass container. During the forming the impact of the pressure air is supported by such way that in the opposite part of mould the vacuum is created.

The main problem at the blow-blow process are debris, like swabbing material, small particles of glass , which are drifted by the airflow and which can settle in the pre-formed molten glass or which are cumulated in the air channel of the plunger mechanism.

Number of the known devices exists, which enables to regulate airflow in the mould at the glass forming. From the CZ patent 291 461 is known an apparatus for the airflow control at the glass forming in the mould, which comprises a multi-way valve, in which body a flat piston valve is placed between slide plates, the flat piston valve being movable across to the axis of the main channel. Across to the linear axis of the piston valve two passages are created, from which one enables input of the pressure air for the counterblow and the second the suction of the air from the area of the neck ring. As a source of vacuum an ejector is used. Disadvantage of this solution is that the flat piston valve could not be sealed perfectly on the two slide plates, which leads to the vacuum decreasing and to the galling of the piston valve by the influence of the glass dust.

EP1235012 discloses a coaxial valve which has a tubular valve body whose end is shaped to cooperate with a sloping, concave or convex valve seat.

Thus, objects of the invention is to propose such a solution, which wouldn't halve the above stated imperfections and which would enable in the best way to suck debris and fine cullet particles from the mould.

### Disclosure of Invention

Above stated objects is reached by the apparatus for airflow control at the glass forming in a mould, comprising a multi-way valve, in which body a piston valve is placed. Behind the valve an ejector is arranged. The piston valve is provided with a central hole. In the body of the valve the piston valve is placed slidingly in the direction of the longitudinal axis of the valve. In one extreme position the piston valve fits closely to the sealing seat, and sealing part of the sealing seat covers the central hole of the piston valve. On the external edge of the sealing seat at least one passage hole is arranged. In the opposite extreme position the piston valve by its central hole connects to the interconnecting channel and at the same time the piston valve covers an input of the pressure medium in the body of the valve. Behind the sealing seat in the body of the valve a reducing channel is created, to which the ejector is connected.

Described embodiment in both extreme positions of the piston valve seals perfectly and at the same time it decreases danger of the galling by the glass particles and other debris influence.

For the perfect suction of the impurities from the pipeline to the mould it is suitable, when the interconnecting channel, central hole of the piston valve and reducing channel lay on the common axis.

For the simplification of the construction it is advantageous, when the piston valve is in the direction to the seat pre-tensed by a spring, which is placed between the valve's body and piston valve.

In the advantageous embodiment the piston valve can be provided with an electromagnetic control, comprising permanent magnets and electric winding or pneumatic control comprising piston - cylinder assembly.

Permanent magnets of the electromagnetic control can be component part of the piston valve and the electric winding can be placed in the valve's body or vice versa.

To the expert it is clear that any other known control of the piston valve can be used.

In the advantageous embodiment the ejector comprises a chamber, in which in the direction of its longitudinal axis a Venturi tube is placed, to which in the area of its mouth a mouthpiece leads with an axially arranged suction channel. The mouthpiece in the mouth of the Venturi tube specifies an annular area, at one hand interconnected by diagonal holes with a filling channel and on the other hand leading to the Venturi tube through a slot. The Venturi tube is ended by an exhausting channel.

### Brief Description of Drawings

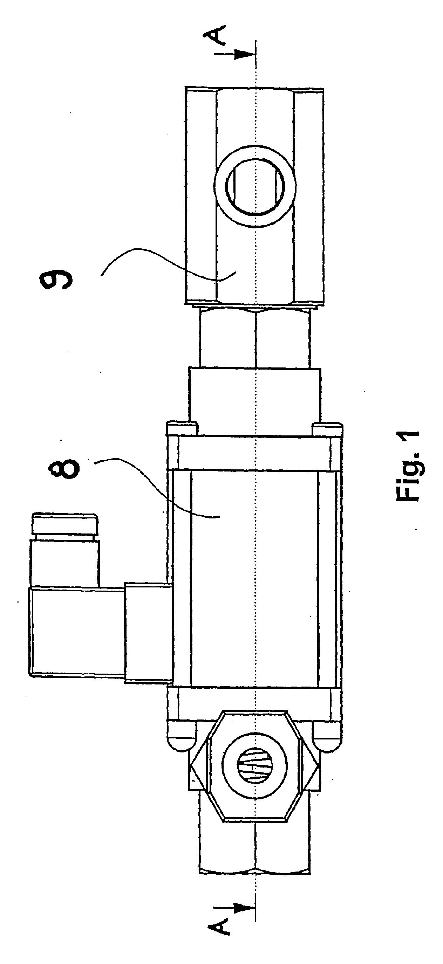

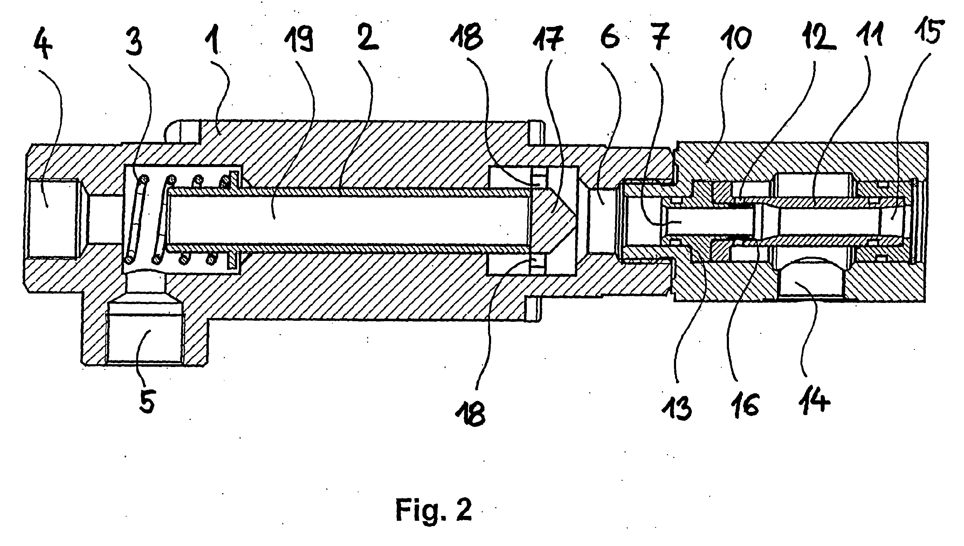

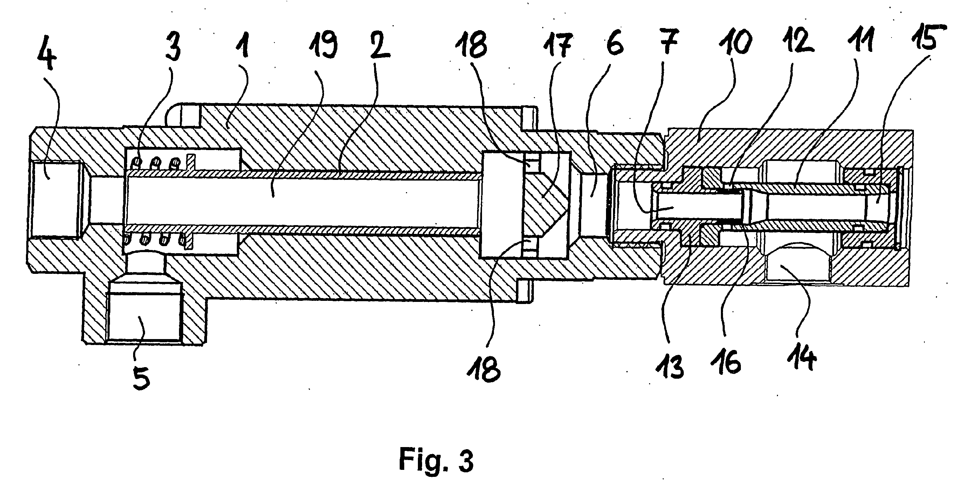

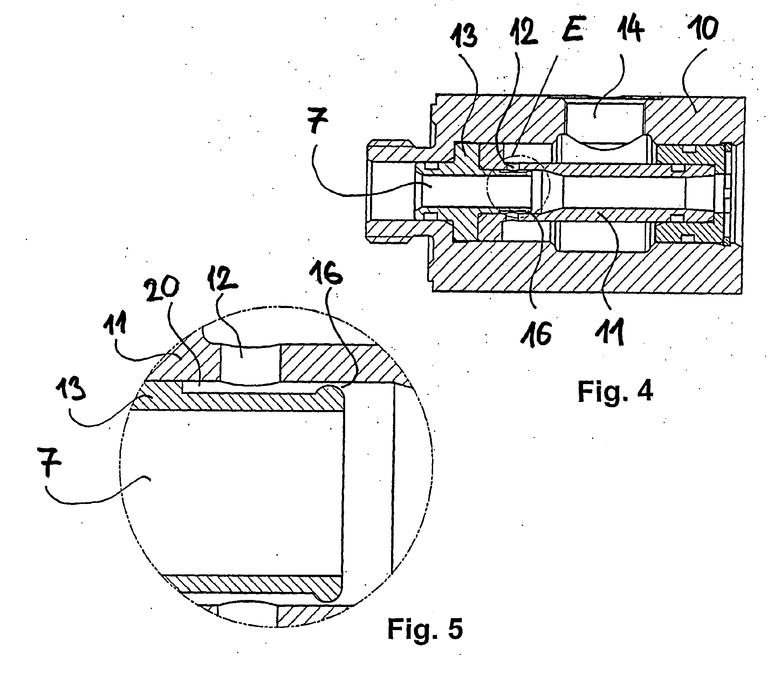

The invention will be more detailed described at examples of embodiments with the references to the drawings, on which the Fig. 1 represents an example of an embodiment according to the invention in the side view. In the Fig. 2 is the same embodiment in the section by the plane A-A from the Fig. 1 with the piston valve in its right extreme position, while in the Fig. 3 the piston valve is in its left extreme position. In the Fig. 4 is, in the enlarged scale, shown the ejector itself and in the Fig. 5 is detail E from the Fig. 4.

### Modes for Carrying Out the Invention

In Fig. 1 to 3 is shown the apparatus for airflow control at the glass forming, which can be used both in the combination with the not shown front mould of the serial glass forming machine and also in the combination with the not shown final mould of the glass forming machine. Apparatus, after the incorporation to the glass-forming machine, connects to the existing mechanism of the mouth. As it is clear from the Fig. 1, the apparatus comprises in line placed three-way valve 8 and an ejector 9. According to the Fig. 2 and 3 the valve 8 comprises a body 1, in which a piston valve 2 with a central hole 19 is axially movably placed.

For the simplification, with reference to the drawings, further will be used the meanings "left" or "right" extreme position of the piston valve 2 respectively. But to the experts it is clear that in practice the orientation of the apparatus can be arbitrary in the space.

To the right extreme position (see Fig. 2) the piston valve 2 is pressed by the spring 3, which is placed between the body 1 of the valve 8 and the piston valve 2. In this right extreme position the piston valve 2 fits closely to the sealing seat 17 and by this way it closes the flow between the interconnecting channel 4 and reducing channel 6. Sealing part of the sealing seat 17 covers the central hole 19 of the piston valve 2. On the external edge of the sealing seat 17, out of the central hole 19, the four passage holes 18 are arranged.

To the left extreme position (see Fig. 3) the piston valve 2 can be moved by commonly known and therefore not shown electromagnetic control, comprising permanent magnets on the piston valve 2 and electric winding, placed in the body 1. It is clear that the electromagnetic control can be replaced by any other known control mechanism of the piston valves, for example by the pneumatic control, comprising piston - cylinder assembly. In such case, for example in body 1 a relevant chamber with input of the pressure air is formed and piston valve 2 is provided with a controlling piston area.

In the left extreme position according to the Fig. 3 the piston valve 2 by its central hole 19 connects to the interconnection channel 4 in the body 1 and at the same time in this position the piston valve 2 closes the input 5 of the pressure medium in the body 1 of the valve 8. Thus a passage from the interconnecting channel 4, through the central hole 19 of the piston valve 2 and through the passage holes 18 of the sealing seat 17 to the reducing channel 6 is opened.

The interconnecting channel 4, the central hole 19 of the piston valve 2 and the reducing channel 6 lay on the common axis.

The ejector 9, shown separately in the Fig. 4 and in the detail in the Fig. 5, connects to the reducing channel 6.

Ejector 9 comprises a chamber 10, in which in the direction of its longitudinal axis a Venturi tube 11 is placed, to which in the area of its mouth a mouthpiece 13 leads with an axially arranged suction channel 7. Mouthpiece 13 specifies in the mouth of the Venturi tube 11 an annular area 20, which is interconnected by diagonal holes 12 with the filling channel 14. The annular area 20 leads to the Venturi tube 11 through a circular slot 16 (see Fig. 5). On the side averted from the mouthpiece 13 the Venturi tube 11 is ended by the exhausting channel 15.

After the apparatus is installed in the not shown front mould of the serial glass-forming machine the function of the apparatus is following.

If the electromagnetic control of the piston valve 2 is not activated this piston valve 2 is pressed by the spring 3 to the right extreme position (see Fig. 2). By the input 5 of the pressure medium the pressed air flows from the not shown source through the interconnection channel 4 to the not shown front mould of the glass-forming machine, where the known pre-blowing of the glass flask occurs.

After the pre-blowing finishing, by the input of the electric energy to the electromagnetic control, the piston valve 2 is re-adjusted to the left extreme position (see Fig. 3), so the input 5 is closed and at the same time the interconnecting channel 4 is connected with the reducing channel 6 through the central hole 19 of the piston valve 2 and through the passage holes 18 of the sealing seat 19. At the same time the pressure air is input to the filling channel 14, from which it flows through the diagonal holes 12 to the annular area 20, from which it outputs through the circular slot 16 and causes the intensive suction in the suction channel 7. By this take place air suction from the not shown front mould through the interconnecting channel 4, central hole 19 of the piston valve 2, passage holes 18 of the sealing seat 17, reducing channel 6, suctions channel 7 up to exhausting channel 15.

Described suction effect enables to suck off impurities in the pipeline to the blank mould and to settle drop of the molten glass in the blank mould up to neck ring and by this perfectly shape the finish of the future glass container.

Above described functions alternate according to the commonly known working cycle of the glass-forming machine in the following order: suction of the impurities from the pipeline to the blank mould, insertion of the molten glass drop to the blank mould and creation of the vacuum under the drop, forming of the future finish of glass container, pre-blowing of the future glass container, invert from the blank into the final mould.

## Claims

1. Apparatus for airflow control at the glass forming in a mould, comprising a multi-way valve (8), in which body (1) a piston valve (2) is placed, while behind the valve (8) an ejector (9) is arranged, the piston valve (2) is provided with a central hole (19) in its longitudinal direction and in the body (1) of the valve (8) the piston valve (2) is placed slidingly in the direction of the longitudinal axis of the valve (8), while in one extreme position the piston valve (2) fits closely to the sealing seat (17), and sealing part of the sealing seat (17) covers the central hole (19) of the piston valve (2) and behind the sealing seat (17) in the body (1) of the valve (8) a reducing channel (6) is created, to which the ejector (9) is connected. **characterized by the fact that** on the external edge of the sealing seat (17) at least one passage hole (18) is arranged and in the opposite extreme position the piston valve (2) by its central hole (19) connects to the interconnecting channel (4) and at the same time the piston valve (2) covers an input (5) of the pressure medium in the body (1) of the valve (8).

2. Apparatus as in Claim 1, **characterized by the fact** that the interconnecting channel (4), the central hole (19) of the piston valve (2) and the reducing channel (6) lay on a common axis.

3. Apparatus as in Claim 1 or 2, **characterized by the fact** that the piston valve (2) is in the direction to the seat (17) pre-tensed by a spring (3), which is placed between the body (1) of the valve (8) and piston valve (2).

4. Apparatus as in any of the previous Claims, **characterized by the fact** that the piston valve (2) is provided with an electromagnetic control, comprising permanent magnets and electric winding.

5. Apparatus as in Claim 4, **characterized by the fact** that the permanent magnets are component part of the piston valve (2) and the electric winding is placed in the body (1).

6. Apparatus as in any of the Claims 1 to 3, **characterized by the fact** that the piston valve (2) is provided with a pneumatic control comprising a piston - cylinder assembly.

7. Apparatus as in any of the previous Claims, **characterized by the fact** that the ejector (9) comprises a chamber (10), in which in the direction of its longitudinal axis a Venturi tube (11) is placed, to which in the area of its mouth a mouthpiece (13) leads with an axially arranged suction channel (7), while the mouthpiece (13) in the mouth of the Venturi tube (11) specifies an annular area (20), at one hand interconnected by diagonal holes (12) with a filling channel (14) and on the other hand leading to the Venturi tube (11) through a slot (16) and the Venturi tube (11) is ended by an exhausting channel (15).

## Patentansprüche

1. Vorrichtung zum Steuern des Luftstroms während der Glasherstellung in einer Form, umfassend: ein Mehrwegventil (8), in dessen Körper (1) sich ein Kolbenventil (2) befindet, während hinter dem Ventil (8) ein Ejektor (9) angeordnet ist, wobei das Kolbenventil (2) mit einer Mittenbohrung (19) in dessen Längsrichtung versehen ist und wobei das Kolbenventil (2) im Körper (1) des Ventils (8) in Richtung der Längsachse des Ventils (8) verschiebbar angeordnet ist, während in einer Endstellung das Kolbenventil (2) enganliegend in den Dichtsitz (17) eingepasst ist und der Dichtungsabschnitt des Dichtsitzes (17) die Mittenbohrung (19) des Kolbenventils (2) abdeckt und hinter dem Dichtsitz (17) im Körper (1) des Ventils (8) ein Reduzierkanal (6) ausgebildet ist, mit dem der Ejektor (9) verbunden ist; **dadurch gekennzeichnet, dass** an der Außenkante des Dichtsitzes (17) mindestens eine Durchlassöffnung (18) angeordnet ist und dass in der entgegengesetzten Endstellung das Kolbenventil (2) über dessen Mittenbohrung (19) mit dem Verbindungskanal (4) in Verbindung steht und gleichzeitig das Kolbenventil (2) einen Einlass (5) für das Druckhilfsmittel in den Körper (1) des Ventils (8) abdeckt.

2. Vorrichtung gemäß Anspruch 1, **dadurch gekennzeichnet, dass** sich der Verbindungskanal (4), die Mittenbohrung (19) des Kolbenventils (2) und der Reduzierkanal (6) auf einer gemeinsamen Achse befinden.

3. Vorrichtung gemäß Anspruch 1 oder 2, **dadurch gekennzeichnet, dass** das Kolbenventil (2) in Richtung des Dichtungssitzes (17) mithilfe einer Feder (3) vorgespannt wird, die zwischen dem Körper (1) des Ventils (8) und dem Kolbenventil (2) angeordnet ist.

4. Vorrichtung gemäß einem der vorhergehenden Ansprüche, **dadurch gekennzeichnet, dass** das Kolbenventil (2) mit einer elektromagnetischen Steuerung ausgestattet ist, die Dauermagneten und eine elektrische Wicklung umfasst.

5. Vorrichtung gemäß Anspruch 4, **dadurch gekennzeichnet, dass** die Dauermagneten Bestandteile des Kolbenventils (2) sind und die elektrische Wicklung im Körper (1) angeordnet ist.

6. Vorrichtung gemäß einem der Ansprüche 1 bis 3, **dadurch gekennzeichnet, dass** das Kolbenventil (2) mit einer pneumatischen Steuerung ausgestattet ist, die eine Kolben-Zylinder-Anordnung umfasst.

7. Vorrichtung gemäß einem der vorhergehenden Ansprüche, **dadurch gekennzeichnet, dass** der Ejektor (9) eine Kammer (10) aufweist, in der in Richtung von dessen Längsachse ein Venturi-Rohr (11) angeordnet ist, zu dem im Bereich von dessen Mündung ein Ansatzrohr (13) mit einem axial angeordneten Saugkanal (7) führt, wobei das Ansatzrohr (13) an der Mündung des Venturi-Rohrs (11) einen ringförmigen Abschnitt (20) definiert, der einerseits über diagonale Öffnungen (12) mit einem Beschickungskanal (14) in Verbindung steht, und andererseits über einen Schlitz (16) zu dem Venturi-Rohr (11) führt, und wobei das Venturi-Rohr (11) in einen Entleerungskanal (15) endet.

## Revendications

1. L'équipement de commande de la circulation d'air lors du formage du verre, comportant une soupape à voies multiples (8), dans le corps (1) de laquelle se trouve un robinet-vanne (2), la soupape étant suivie d'un éjecteur (9), le robinet-vanne (2) est muni en son centre d'un orifice central (19) et dans son corps (1) de soupape (8) le robinet-vanne (2) est placé de manière ajustable selon l'axe longitudinal de la soupape (8); ce robinet-vanne (2) touche, dans une de ses positions extrêmes, le joint du siège (17) et le logement du joint (17) recouvre l'orifice central (19) du robinet-vanne (2) et, après le siège (17) se trouve dans le corps (1) de la soupape (8) creusé un canal de passage (6) auquel l'éjecteur(9) est raccordé; **ceci garantit que,** après le siège de joint (17) il reste au moins un orifice libre (18) tandis que, dans la position extrême opposée, le robinet-vanne (2) place son orifice central (19) en face du canal de liaison (4) alors que le robinet-vanne (2) couvre l'arrivée (5) du média sous pression dans le corps (1) de la soupape (8).

2. Équipement selon l'exigence 1, **caractéristique par le fait** que le canal de liaison (4), l'orifice central (19) de la soupape (2) et le canal de passage (6) se trouvent sur un même axe.

3. Équipement selon l'exigence 1 ou 2, **caractéristique par le fait que** le robinet-vanne (2) est dirigé vers le siège (17) et y tenu par le ressort (3), placé entre le corps (1) de la soupape (8) le robinet-vanne (2).

4. Équipement selon n'importe laquelle des exigences précédentes, le robinet-vanne (2) est muni d'une commande électromagnétique comprenant des aimants permanents et un enroulement électrique.

5. Équipement selon l'exigence 4, caractéristique **par le fait que** les aimants permanents sont intégrés au robinet-vanne (2) et que l'enroulement électrique est placé dans le corps (1).

6. Équipement selon n'importe laquelle des exigences 1 à 3, **caractéristique par le fait que** le robinet-vanne (2) est muni d'une commande pneumatique avec un système cylindre - piston.

7. Équipement selon n'importe laquelle des exigences précédentes, **caractéristique par le fait que** l'éjecteur (9) comporte une chambre (10) dans laquelle est logé, parallèlement à l'axe, un tube Venturi (11) près de l'extrémité duquel se trouve une embouchure (13) dans le même axe que le canal d'aspiration (7), cette embouchure (13) limitant un espace annulaire (20) à la sortie du tube Venturi (11) relié aux orifices diagonaux (12) du canal d'arrivée(14) et aussi à l'entrée du tube Venturi (11) par la fente (16), le tube Venturi étant terminé par le canal d'échappement (15).
